# EUROPÄISCHE PATENTSCHRIFT

(11) **EP 2 578 928 B1**
(45) Veröffentlichungstag und Bekanntmachung des Hinweises auf die Patenterteilung: **14.12.2016**
(21) Anmeldenummer: 12187381.4
(22) Anmeldetag: 05.10.2012
(51) Int. Cl.: F21V 3/04, F21V 23/04, F21S 19/00, F21S 11/00, E04B 9/32, G02B 6/00, F21V 8/00, F21Y 115/10

(54) **Beleuchtungsvorrichtung mit natürlichem und künstlichem Licht**
Lighting device with natural and artificial light
Dispositif d'éclairage avec lumière naturelle et artificielle

(30) Priorität: 06.10.2011 DE 202011051548 U
(43) Veröffentlichungstag der Anmeldung: 10.04.2013
(73) Patentinhaber: Zumtobel Lighting GmbH, 6850 Dornbirn (AT)
(72) Erfinder: Gutlederer, Erwin, 3371 Neumarkt (AT); Ebner, Stephan, 6850 Dornbirn (AT)
(74) Vertreter: Thun, Clemens

(56) Entgegenhaltungen:
- EP-A1- 2 369 087
- WO-A1-2011/089553
- KR-A- 20110 006 230
- KR-B1- 101 052 890
- US-A1- 2009 323 356
- US-B2- 7 973 235

## Beschreibung

Die Erfindung betrifft eine Beleuchtungsvorrichtung zum Beleuchten eines in einem Gebäude befindlichen Raumes, wobei die Beleuchtungsvorrichtung ein Lichtleitelement zum Leiten eines natürlichen Lichts von einer Stelle außerhalb des Gebäudes in den Raum aufweist.

Aus dem Stand der Technik ist es bekannt, mithilfe spezieller Licht-Auffangvorrichtungen, die beispielsweise auf dem Dach eines Gebäudes positioniert werden, Tageslicht einzufangen und über Lichtleiter an eine Leuchte weiterzuleiten, die zur Beleuchtung eines Raums in dem Gebäude dient. In der Leuchte wird das Licht dann mithilfe eines Lichtaustrittselements abgegeben, wobei als Lichtaustrittselement beispielsweise eine transparente Lichtleiterscheibe verwendet wird. Durch die Verwendung des Tageslichts lassen sich signifikante Effekte erzielen, beispielsweise eine besonders gute Farbwidergabe und praktisch keine Wärmeentwicklung an der Stelle der Lichtabgabe. Dabei lassen sich auch - sofern erwünscht - vergleichsweise einfach bestimmte Spektralbereiche der im Außenbereich eingefangenen Strahlung herausfiltern, beispielsweise der UV-Bereich oder der Infrarotbereich oder zumindest Teile dieser Bereiche. Auch lassen sich Betriebskosten im Vergleich zur üblichen künstlichen Beleuchtung sehr deutlich reduzieren.

Dem steht allerdings gegenüber, dass ein derartiges System von der äußeren Tageslichtsituation abhängig ist, also vom Wetter, dem Dämmerungszustand der Tages- bzw. Nachtzeit usw.

Aus der WO 2011/089553 A1 ist eine Beleuchtungsanordnung mit einem Lichtleiter für natürliches Licht und mit Leuchtdioden zur Erzeugung von künstlichem Licht bekannt. Die Beleuchtungsanordnung weist eine Lichtleitplatte auf, über die sowohl das natürliche, als auch das künstliche Licht abgegeben wird.

Der Erfindung liegt die Aufgabe zugrunde, eine entsprechende Beleuchtungsvorrichtung zu verbessern. Insbesondere soll mit der Beleuchtungsvorrichtung eine verbesserte Lichtabgabe möglich sein.

Diese Aufgabe wird gemäß der Erfindung mit dem in dem unabhängigen Anspruch angegebenen Gegenstand gelöst. Besondere Ausführungsarten der Erfindung sind in den abhängigen Ansprüchen angegeben.

Gemäß der Erfindung ist eine Beleuchtungsvorrichtung zum Beleuchten eines in einem Gebäude befindlichen Raumes vorgesehen, wobei die Beleuchtungsvorrichtung ein Lichtleitelement zum Leiten eines natürlichen Lichts von einer Stelle außerhalb des Gebäudes in den Raum aufweist. Weiterhin weist die Beleuchtungsvorrichtung ein Lichterzeugungselement zur Erzeugung eines künstlichen Lichts auf, sowie einen Lichtabgabe-Oberflächenbereich, wobei die Beleuchtungsvorrichtung derart gestaltet ist, dass sowohl das natürliche Licht, als auch das künstliche Licht zumindest teilweise über den Lichtabgabe-Oberflächenbereich abgegeben werden kann.

Auf diese Weise lässt sich erzielen, dass mit der Beleuchtungsvorrichtung auch in einem Fall Licht zum Beleuchten des Raums abgeben wird, in dem kein natürliches Licht in entsprechend ausreichendem Maße zur Verfügung steht, also beispielsweise nachts oder bei Dämmerung.

Vorzugsweise weist die Beleuchtungsvorrichtung weiterhin ein Steuerelement zur Steuerung des Lichterzeugungselements auf, wobei die Beleuchtungsvorrichtung derart ausgestaltet ist, dass durch das Steuerelement eine Intensität und/oder eine spektrale Eigenschaft, beispielsweise die Farbtemperatur des künstlichen Lichts verändert werden kann. Auf diese Weise lässt sich erzielen, dass das insgesamt über den Lichtabgabe-Oberflächenbereich abgegebene Licht bestimmte gewünschte Eigenschaften aufweist. Insbesondere kann auch eine zeitlich abhängige Steuerung vorgesehen sein, so dass beispielsweise nachts das künstliche Licht automatisch abgegeben wird.

Eine noch weitergehend verbesserte Lichtabgabe ist ermöglicht, wenn die Beleuchtungsvorrichtung außerdem ein Sensorelement zum Erfassen einer Eigenschaft des natürlichen Lichts aufweist, wobei die Beleuchtungsvorrichtung derart ausgestaltet ist, dass das Steuerelement in Abhängigkeit der, von dem Sensorelement erfassten Eigenschaft des natürlichen Lichts das Lichterzeugungselement ansteuern kann. Damit lässt sich erzielen, dass das insgesamt über den Lichtabgabe-Oberflächenbereich abgegebene Licht automatisch in Abhängigkeit von dem natürlichen Licht angesteuert wird. Beispielsweise lässt sich auf diese Weise mit dem Steuerelement automatisch das künstliche Licht intensivieren, wenn das natürliche Licht in seiner Intensität abnimmt.

Bei der Eigenschaft des natürlichen Lichts handelt es sich vorzugsweise um eine Farbtemperatur und/oder eine Intensität und/oder eine spektrale Eigenschaft. Beispielsweise lässt sich auf diese Weise die Farbtemperatur des künstlichen Lichts an die Farbtemperatur des natürlichen Lichts anpassen.

Hierfür weist das Lichterzeugungselement vorzugsweise wenigstens eine erste LED (LED: lichtemittierende Diode) zur Erzeugung eines ersten Lichts und wenigstens eine zweite LED zur Erzeugung eines zweiten Lichts auf, wobei sich das erste Licht von dem zweiten Licht in seinem Spektrum unterscheidet.

Das Lichtleitelement zum Leiten eines natürlichen Lichts weist vorteilhaft wenigstens eine Lichtleitfaser, vorzugsweise aus Kunststoff, auf. Weiterhin vorzugsweise weist das Lichtleitelement zum Leiten eines natürlichen Lichts außerdem wenigstens eine weitere Lichtleitfaser auf, die dazu ausgebildet ist, einen Teil des natürlichen Lichts zur Erfassung der Eigenschaft zu dem Sensorelement zu leiten. Hierdurch ist eine besonders genaue und raumsparende Erfassung der Eigenschaft des natürlichen Lichts ermöglicht.

Erfindungsgemäß ist die Beleuchtungsvorrichtung derart gestaltet, dass die Lichtabgabe-Oberflächenbereich ein Oberflächenbereich einer Lichtleitplatte ist. Vorzugsweise ist die Lichtleitplatte ringförmig oder rechteckig gestaltet.

Erfindungsgemäß ist die Beleuchtungsvorrichtung dabei derart gestaltet ist, dass das natürliche Licht an mehreren ersten Stellen in die Lichtleitplatte eingekoppelt wird und das künstliche Licht an mehreren zweiten Stellen. Hierdurch lässt sich erzielen, dass das insgesamt über den Lichtabgabe-Oberflächenbereich abgegebene Licht besonders gleichmäßig erscheint. Dabei sind Lichteinkopplungsbereiche zur Einkopplung des natürlichen Lichts an den ersten Stellen andersartig gestaltet als weitere Lichteinkopplungsbereiche zur Einkopplung des künstlichen Lichts an den zweiten Stellen. Weiterhin vorteilhaft ist dabei wenigstens eine der ersten Stellen zwischen zwei der zweiten Stellen und wenigstens eine der zweiten Stelle zwischen zwei der ersten Stellen angeordnet. Hierdurch lässt sich eine besonders gute Gleichmäßigkeit erzielen.

Vorzugsweise befinden sich die zweiten Stellen an einem äußeren Rand der Lichtleitplatte. Hierdurch ist eine besonders gute Abfuhr einer bei Betrieb des Lichterzeugungselements entstehenden Wärme ermöglicht.

Mit Bezug auf eine besonders effektive Einkopplung des Lichts in die Lichtleitplatte ist es vorteilhaft, wenn die Beleuchtungsvorrichtung weiterhin wenigstes ein Licht-Einkoppelelement zum Einkoppeln des von dem Lichtleitelement in den Raum geleiteten natürlichen Lichts in die Lichtleitplatte aufweist. Dabei ist das Licht-Einkoppelelement vorzugsweise zur Aufweitung eines, durch das natürliche Licht gebildeten Lichtkegels ausgebildet.

Vorteilhaft weist das Lichtleitelement zum Leiten eines natürlichen Lichts eine Lichtleitelement-Lichtabgabefläche für eine Abgabe des natürlichen Lichts auf und das Lichterzeugungselement eine Lichterzeugungselement-Lichtabgabefläche für eine Abgabe des künstlichen Lichts, wobei die Lichtleitelement-Lichtabgabefläche und die Lichterzeugungselement-Lichtabgabefläche zumindest im Wesentlichen in einer geneinsamen Ebene liegend angeordnet sind. Hierdurch lässt sich für das natürliche Licht und das künstliche Licht vergleichsweise einfach eine gemeinsame Abstrahlebene erzielen.

Vorteilhaft umfasst dabei das Lichterzeugungselement LEDs, die auf einer Platine angeordnet sind, wobei die Platine eine Durchgangsöffnung aufweist und die Lichtleitelement-Lichtabgabefläche zumindest im Wesentlichen in der Durchgangsöffnung angeordnet ist.

Die Erfindung wird im Folgenden anhand von Ausführungsbeispielen und mit Bezug auf die Zeichnungen näher erläutert. Es zeigen:
Fig. 1 eine Skizze zu einem ersten Ausführungsbeispiel einer erfindungsgemäßen Beleuchtungsvorrichtung,
Fig. 2 eine Skizze zu der Lichtleitplatte der Beleuchtungsvorrichtung,
Fig. 3 eine entsprechende, detailliertere Skizze,
Fig. 4 eine Skizze zu einer Variation, bei der das künstliche Licht vom äußeren Rand her in die Lichtleitplatte eingekoppelt wird,
Fig. 5 eine Skizze zu einem zweiten Ausführungsbeispiel,
Fig. 6 eine Skizze zu einem dritten Ausführungsbeispiel,
Fig. 7 eine Skizze zu einem vierten nicht beanspruchten Ausführungsbeispiel und
Fig. 8 eine Aufsicht auf den Lichtabgabe-Oberflächenbereich beim vierten Ausführungsbeispiel.

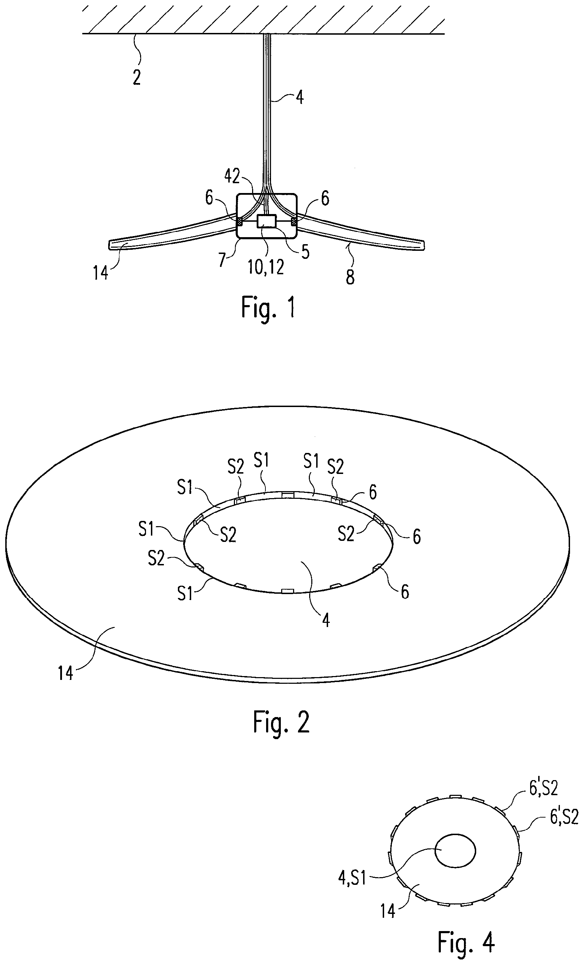

Fig. 1 zeigt eine Skizze zu einem ersten Ausführungsbeispiel einer erfindungsgemäßen Beleuchtungsvorrichtung. Die Beleuchtungsvorrichtung ist zum Beleuchten eines in einem Gebäude befindlichen Raumes ausgebildet. In Fig. 1 ist ein Teil einer Deckenwand 2 des Raums beispielhaft skizziert.

Zum Leiten eines natürlichen Lichts von einer Stelle außerhalb des Gebäudes in den Raum weist die Beleuchtungsvorrichtung ein Lichtleitelement 4 auf. In Fig. 1 ist lediglich ein Teil des Lichtleitelements 4 zu erkennen, der sich innerhalb des Raums erstreckt. Andererseits kann das Lichtleitelement 4 insbesondere mit einer (in den Figuren als solcher nicht gezeigten) Licht-Auffangvorrichtung verbunden sein, die dazu dient, natürliches Licht aufzunehmen und in das Lichtleitelement 4 einzuspeisen. Die Licht-Auffangvorrichtung kann dafür vorgesehen sein, an der Stelle außerhalb des Gebäudes installiert zu werden, also beispielsweise auf einem Dach des Gebäudes. Die Technik mit Bezug auf die Licht-Auffangvorrichtung und die Lichtleitung in den Raum ist an sich bekannt und deshalb wird an dieser Stelle hierauf nicht näher eingegangen.

Das Lichtleitelement 4 zum Leiten eines natürlichen Lichts kann insbesondere wenigstens eine Lichtleitfaser aufweisen. Eine derartige Faser ermöglicht eine effiziente Leitung des natürlichen Lichts in den Raum. Bei der Lichtleitfaser kann es sich insbesondere um eine Lichtleitfaser aus Kunststoff oder um eine Glasfaser handeln. Vorzugsweise umfasst das Lichtleitelement 4 mehrere derartige Fasern, insbesondere ein Bündel derartiger Fasern.

Weiterhin umfasst die Beleuchtungsvorrichtung ein Lichterzeugungselement 6 zur Erzeugung eines künstlichen Lichts. Das Lichterzeugungselement 6 ist vorzugsweise derart gestaltet, dass es ein erstes Licht und ein zweites Licht erzeugen kann, wobei sich das zweite Licht in seiner Intensität und/oder Farbtemperatur und/oder spektralen Zusammensetzung von dem ersten Licht unterscheidet.

Besonders vorteilhaft ist es, wenn das Lichterzeugungselement 6 derart gestaltet ist, dass es Licht mit unterschiedlichen, insbesondere einstellbaren Farbtemperaturen und/oder Intensitäten und/oder Farbtönen erzeugen kann.

Insbesondere kann das Lichterzeugungselement 6 hierzu wenigstens eine erste LED zur Erzeugung des ersten Lichts und wenigstens eine zweite LED zur Erzeugung des zweiten Lichts aufweisen. Beispielsweise kann das Lichterzeugungselement 6 eine erste LED zur Erzeugung eines ersten weißen Lichts und eine zweite LED zur Erzeugung eines zweiten weißen Lichts aufweisen, wobei sich das zweite weiße Licht vom ersten weißen Licht in seiner Farbtemperatur bzw. Soll-Farbtemperatur unterscheidet. Beispielsweise kann für das erste weiße Licht eine Farbtemperatur von weniger als 5000 K vorgesehen sein und für das zweite weiße Licht eine Farbtemperatur von mehr als 5000 K.

Das Lichterzeugungselement 6 muss dabei nicht in Form wenigstens einer LED gegeben sein, es kann auch durch eine andere Art von Lichtquelle gegeben sein, also beispielsweise durch wenigstens eine Leuchtstoffröhre.

Weiterhin umfasst die Beleuchtungsvorrichtung einen Lichtabgabe-Oberflächenbereich 8, wobei die Beleuchtungsvorrichtung derart gestaltet ist, dass sowohl das natürliche Licht, als auch das künstliche Licht zumindest teilweise, vorzugsweise zumindest überwiegend über den Lichtabgabe-Oberflächenbereich 8 abgegeben werden kann.

Weiterhin umfasst die Beleuchtungsvorrichtung vorteilhaft ein Steuerelement 10 zur Steuerung des Lichterzeugungselements 6. Die Gestaltung ist dabei vorzugsweise derart, dass mit dem Steuerelement 10 die Intensität und/oder die Farbtemperatur und/oder eine spektrale Eigenschaft des künstlichen Lichts verändert werden kann. Hierdurch ist ermöglicht, das künstliche Licht in Abhängigkeit einer entsprechenden Eigenschaft des natürlichen Lichts zu verändern, insbesondere an das natürliche Licht anzupassen oder mit Bezug auf die Eigenschaft anzunähern.

Um eine entsprechende Eigenschaft des natürlichen Lichts automatisch erfassen zu können, weist die Beleuchtungsvorrichtung vorzugsweise weiterhin ein in Fig. 1 lediglich sehr schematisch angedeutetes Sensorelement 12 zum Erfassen einer Eigenschaft des natürlichen Lichts auf, wobei die Beleuchtungsvorrichtung derart ausgestaltet ist, dass das Steuerelement 10 in Abhängigkeit der von dem Sensorelement 12 erfassten Eigenschaft des natürlichen Lichts das Lichterzeugungselement 6 ansteuern kann.

Das Sensorelement 12 kann insbesondere - wie in Fig. 1 angedeutet - benachbart zu dem Steuerelement 10 angeordnet sein; beispielsweise kann die Beleuchtungsvorrichtung eine Baueinheit 5 umfassen, die sowohl das Steuerelement 10, als auch das Sensorelement 12 umfasst.

Zur Erfassung der entsprechenden Eigenschaft des natürlichen Lichts weist das Lichtleitelement 4 vorzugsweise außerdem wenigstens eine weitere Lichtleitfaser 42 auf, die dazu ausgebildet ist, einen Teil des natürlichen Lichts zur Erfassung der Eigenschaft zu dem Sensorelement 12 zu leiten.

Wie in Fig. 1 weiterhin angedeutet, kann die Beleuchtungsvorrichtung ein Gehäuse 7 aufweisen, in dem das Steuerelement 10 und das Sensorelement 12 angeordnet sind. Auch das Lichterzeugungselement 6 kann in dem Gehäuse 7 angeordnet sein.

Wenn durch das Sensorelement 12 die Intensität des natürlichen Lichts erfasst werden kann, lässt sich erzielen, dass mithilfe des Steuerelements 10 bei Unterschreitung eines vorab gegebenen Schwellenwerts der Intensität des natürlichen Lichts eine unterstützende Lichtabgabe durch das Lichterzeugungselement 6 automatisch zugeschaltet wird.

Wenn durch das Sensorelement 12 die Farbtemperatur des natürlichen Lichts erfasst werden kann, lässt sich erzielen, dass mithilfe des Steuerelements 10 das künstliche Licht in seiner Farbtemperatur an die Farbtemperatur des natürlichen Lichts angeglichen wird bzw. die Farbtemperatur des natürlichen Lichts "nachgebildet" wird. Entsprechendes gilt mit Bezug auf eine anderweitige spektrale Eigenschaft, also beispielsweise die Farbe oder der Farbton des natürlichen Lichts. Dementsprechend vorzugsweise kann das Lichterzeugungselement 6 insbesondere mehr als zwei LEDs aufweisen, wobei die LEDs Licht in unterschiedlichen Farben abgeben, wobei weiterhin vorzugsweise das Steuerelement 10 dazu ausgebildet ist, die LEDs so anzusteuern, dass ihre Intensitäten unabhängig voneinander regelbar sind.

Es ist auch möglich, eine zeitlich abhängige Steuerung des Lichterzeugungselements 6 durch das Steuerelement 10 vorzusehen, so dass beispielsweise in Abhängigkeit der Tageszeit die Farbtemperatur des künstlichen Lichts eingestellt wird.

Besonders bevorzugt ist vorgesehen, dass sowohl die Intensität als auch eine spektrale Eigenschaft des natürlichen Lichts mit dem Sensorelement 12 erfasst werden kann und dann mit dem Steuerelement 10 das künstliche Licht dementsprechend angepasst zugeschaltet werden kann.

Vorteilhaft ist die Beleuchtungsvorrichtung derart gestaltet, dass der Lichtabgabe-Oberflächenbereich 8 ein Oberflächenbereich einer Lichtleitplatte 14 ist. Fig. 2 zeigt - sehr schematisch - eine perspektivische Ansicht der Lichtleitplatte 14. Grundsätzlich kann die Lichtleitplatte 14 eine beliebige Form aufweisen. Wie anhand des ersten Ausführungsbeispiels beispielhaft gezeigt, kann die Lichtleitplatte 14 ringförmig gestaltet sein. Das Lichterzeugungselement 6 weist bei diesem Beispiel mehrere LEDs auf bzw. besteht aus mehreren LEDs.

Die Ausgestaltung ist hierbei derart, dass das natürliche Licht an mehreren ersten Stellen *S1* in die Lichtleitplatte 14 eingekoppelt wird und das künstliche Licht an mehreren zweiten Stellen S2. Beim gezeigten Beispiel erfolgt die Einkopplung sowohl des natürlichen Lichts, als auch des künstlichen Lichts im Bereich des, durch die Ringform der Lichtleitplatte 14 gegebenen, inneren Rands der Lichtleitplatte 14.

Dabei kann die Gestaltung weiterhin derart sein, dass wenigstens eine der ersten Stellen *S1* zwischen zwei der zweiten Stellen S2 und wenigstens eine der zweiten Stellen S2 zwischen zwei der ersten Stellen *S1* angeordnet ist. Insbesondere kann eine "alternierende" Anordnung der ersten Stellen *S1* und der zweiten Stellen *S2* vorgesehen sein. Hierdurch ist eine besonders gleichmäßige Lichteinkopplung und im Weiteren eine besonders gleichmäßige Lichtabgabe über den Lichtabgabe-Oberflächenbereich 8 der Lichtleitplatte 14 ermöglicht.

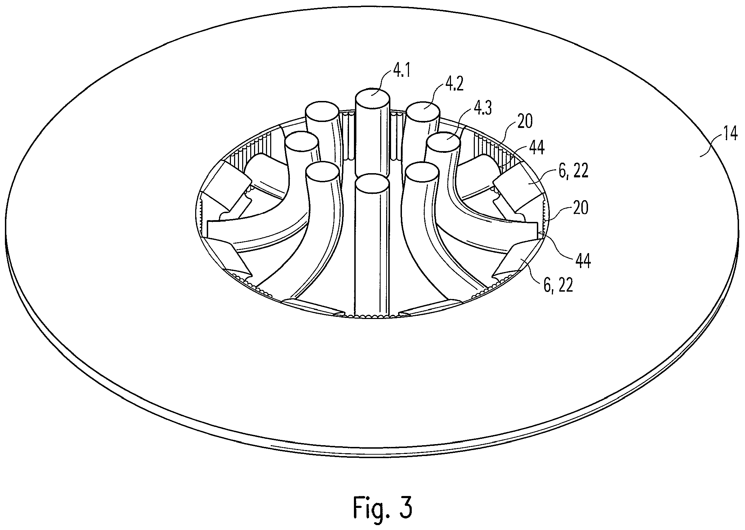

Fig. 3 zeigt eine detailliertere Skizze der Lichtleitplatte 14 gemäß diesem Ausführungsbeispiel. Das Lichtleitelement 4 zum Leiten eines natürlichen Lichts umfasst in diesem Fall mehrere einzelne Fasern 4.1, 4.2, 4.3, die jeweils einen Lichtabgabeendbereich 44 aufweisen, wobei die Anordnung derart ist, dass aus den Lichtabgabeendbereichen 44 jeweils ein Teil des natürlichen Lichts austreten kann, der in der Folge in die Lichtleitplatte 14 eingekoppelt wird. Vorzugsweise weist die Beleuchtungsvorrichtung hierfür weiterhin wenigstens ein Licht-Einkoppelelement 20 auf, das zur Unterstützung der Einkopplung des natürlichen Lichts in die Lichtleitplatte 14 dient. Insbesondere kann jeweils ein Licht-Einkoppelelement 20 für jeden der Lichtabgabeendbereiche 44 vorgesehen sein. Dies ist vorteilhaft, weil Lichtleitfasern im Allgemeinen ein vergleichsweise stark gebündeltes Licht abgeben und durch ein entsprechendes Licht-Einkoppelelement 20 eine Aufweitung des Lichts, insbesondere in einer durch die Form der Lichtleitplatte 14 gegebenen Ebene, erzielt werden kann und in der Folge einer bessere, gleichmäßigere Lichtverteilung innerhalb der Lichtleitplatte 14. Das Licht-Einkoppelelement 20 kann hierzu vorzugsweise eine halbzylinderartige oder prismatische Struktur aufweisen, insbesondere eine zylinderförmige Prismenstruktur.

Demgegenüber stellt eine LED üblicherweise eine Lichtquelle dar, die Licht in einem vergleichsweise sehr weiten Raumwinkelbereich abgibt. Für die LEDs des Lichterzeugungselements 6 kann dementsprechend jeweils ein andersartiges Licht-Einkoppelelement 22 vorgesehen sein, wobei das andersartige Licht-Einkoppelelement 22 einen Raumwinkelbereich des von der LED erzeugten Lichts verkleinert, also einen entsprechenden Lichtkegel "einengt".

Dementsprechend sind also die Lichteinkopplungsbereiche zur Einkopplung des natürlichen Lichts an den ersten Stellen *S1* andersartig gestaltet als die weiteren Lichteinkopplungsbereiche zur Einkopplung des künstlichen Lichts an den zweiten Stellen *S2.*

In Fig. 4 ist eine Variante skizziert, bei der die Einkopplung des natürlichen Lichts - wie im oben gezeigten Fall - vom inneren Rand der Lichtleitplatte 14 her an den ersten Stellen *S1* erfolgt, die Einkopplung des künstlichen Lichts allerdings - vorzugsweise lediglich - vom äußeren Rand der Lichtleitplatte 14 her über LEDs 6' an den zweiten Stellen *S2.* Wenn sich die zweiten Stellen *S2* an einem äußeren Rand der Lichtleitplatte 14 befinden, kann Wärme, die sich bei einem Betrieb des Lichterzeugungselements 6 bzw. der LEDs 6' bildet, im Allgemeinen besser abgegeben werden.

Wie bereits erwähnt, führen die einzelnen Lichtleitfasern von der Auffangvorrichtung in den Raum vorzugsweise in Form eines Bündels, das - wie in Fig. 1 skizziert - von der Decke 2 des Raums zu der Lichtleitplatte 14 führen kann. Dabei kann dieses Lichtleitfaserbündel nicht ummantelt vorgesehen sein und von einer Außenseite her sichtbar. Dadurch, dass in den Lichtleitfasern üblicherweise zumindest geringfügig Fehlstrukturen oder streuende Elemente enthalten sind, lässt sich der Effekt erzielen, dass diese Fasern leicht illuminiert erscheinen bzw. glimmen, so dass ein ansprechender optischer Effekt erzielt werden kann. Es lässt sich sozusagen der Eindruck erzeugen, dass das Licht durch die Lichtleitfasern "strömt".

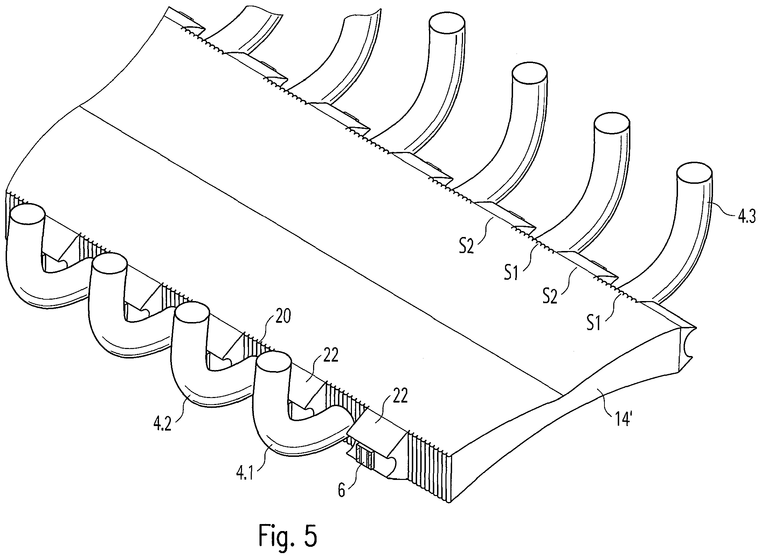

In Fig. 5 ist eine Skizze zu einem zweiten Ausführungsbeispiel gezeigt; die Bezugszeichen sind im analogen Sinn zu oben gebraucht. Im Folgenden wird lediglich auf Unterschiede zum ersten Ausführungsbeispiel eingegangen.

Bei diesem zweiten Ausführungsbeispiel ist die Lichtleitplatte 14' im Wesentlichen rechteckig gestaltet. Die Einkopplung des Lichts erfolgt auf zwei gegenüberliegenden Seiten, beispielsweise auf den beiden längeren Seiten der Lichtleitplatte 14, wobei die Gestaltung beispielsweise derart ist, dass sich jeweils die ersten Stellen *S1,* an denen das natürliche Licht eingekoppelt wird, mit den zweiten Stellen *S2,* an denen das künstliche Licht eingekoppelt wird, abwechseln. Es kann auch die Einkopplung des natürlichen Lichts auf einer der beiden Längsseiten der Lichtleitplatte 14' vorgesehen sein und die Einkopplung des künstlichen Lichts auf der gegenüberliegenden Längsseite.

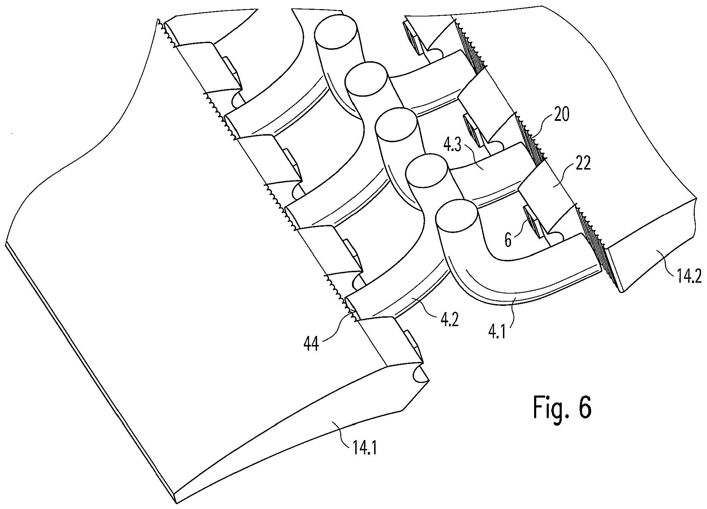

In Fig. 6 ist eine Skizze zu einem dritten Ausführungsbeispiel gezeigt; die Bezugszeichen sind wiederum im analogen Sinn zu oben gebraucht. Im Folgenden wird lediglich auf Unterschiede zum zweiten Ausführungsbeispiel eingegangen.

Bei diesem dritten Ausführungsbeispiel weist die Beleuchtungsvorrichtung zwei Lichtleitplatten 14.1 und 14.2 auf, die vorzugsweise jeweils im Wesentlichen rechteckig gestaltet sind. Die Einkopplung des Lichts erfolgt aus einem Bereich, der sich zwischen den beiden Lichtleitplatten 14.1 und 14.2 befindet. Hierdurch ist eine besonders raumsparende Zuführung der Lichtleitfasern zu der Lichtleitplatte 14 ermöglicht.

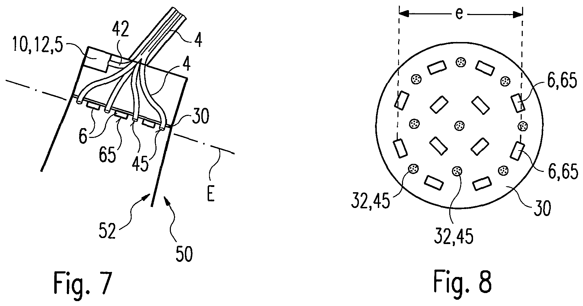

In Fig. 7 ist eine Skizze zu einem vierten Ausführungsbeispiel gezeigt. Im Folgenden wird wiederum lediglich auf die Unterschiede zu den obigen Ausführungsbeispielen eingegangen.

Das Lichtleitelement 4 zum Leiten eines natürlichen Lichts weist hierbei eine Lichtleitelement-Lichtabgabefläche 45 für eine Abgabe des natürlichen Lichts auf; es kann insbesondere vorgesehen sein, dass jede der Lichtleitfasern des Lichtleitelements 4 jeweils eine Lichtleitelement-Lichtabgabefläche 45 aufweist.

Das Lichterzeugungselement 6 weist eine Lichterzeugungselement-Lichtabgabefläche 65 auf. Insbesondere kann jede der LEDs eine eigene Lichterzeugungselement-Lichtabgabefläche 65 aufweisen. Dabei sind die Lichtleitelement-Lichtabgabefläche 45 und die Lichterzeugungselement-Lichtabgabefläche 65 zumindest im Wesentlichen in einer gemeinsamen Ebene E liegend angeordnet. In Fig. 8 ist eine Ansicht normal auf die Ebene E skizziert. Man erkennt mehrere Lichtleitelement-Lichtabgabeflächen 45 und mehrere Lichterzeugungselement-Lichtabgabeflächen 65.

Mit "im Wesentlichen" in einer gemeinsamen Ebene *E* sei dabei zum Ausdruck gebracht, dass der maximale Abstand der Lichtleitelement-Lichtabgabeflächen 45 und der Lichterzeugungselement-Lichtabgabeflächen 65 von der Ebene *E* kleiner ist als ein kleines Maß, beispielsweise kleiner als 10% oder kleiner als 5% des maximalen Entfernung *e* zwischen zwei Lichterzeugungselement-Lichtabgabeflächen 65.

Eine besonders vorteilhafte Gestaltung ist ermöglicht, wenn das Lichterzeugungselement 6 LEDs umfasst, die auf einer beispielsweise kreisförmigen Platine 30 angeordnet sind, wobei die Platine 30 eine Durchgangsöffnung 32 aufweist und die Lichtleitelement-Lichtabgabefläche 45 zumindest im Wesentlichen in der Durchgangsöffnung 32 angeordnet ist. Natürlich können mehrere entsprechende Durchgangsöffnungen 32 vorgesehen sein, insbesondere für jede Lichtleitelement-Lichtabgabefläche 45 jeweils eine Durchgangsöffnung 32.

Die Lichtleitfasern sind hierbei also sozusagen von der Rückseite an und durch die Platine 30 geführt, die LEDs sind an der Vorderseite der Platine 30 angeordnet.

Wiederum kann eine weitere Lichtleitfaser 42 zur Zuführung eines Teils des natürlichen Lichts zu dem Sensorelement 12 vorgesehen sein.

Wenn die Lichtleitelement-Lichtabgabeflächen 45 und die Lichterzeugungselement-Lichtabgabeflächen 65 entsprechend gleichmäßig über ein Areal auf der Vorderseite der Platine 30 verteilt angeordnet sind, lässt sich eine besonders gleichmäßige Lichtabgabe erzielen. Beispielsweise können mindestens drei oder mindestens fünf Lichtleitelement-Lichtabgabeflächen 45 und mindestens drei oder mindestens fünf Lichterzeugungselement-Lichtabgabeflächen 65 vorgesehen sein.

Den LEDs bzw. den Lichterzeugungselement-Lichtabgabeflächen 65 können andere Optiken zugeordnet sein, als den Endbereichen der Lichtleitfasern bzw. den Lichtleitelement-Lichtabgabeflächen 45.

Es kann auch vorgesehen sein, dass sowohl das natürliche Licht, als auch das künstliche Licht zur weitergehenden Homogenisierung in eine Licht-Mischkammer abgegeben wird.

Wie in Fig. 7 skizziert, kann zur Abgabe des natürlichen Lichts und des künstlichen Lichts ein Strahler 50 vorgesehen sein, der beispielsweise einen topfförmigen Reflektor 52 umfasst, wobei die Lichtleitelement-Lichtabgabefläche 45 und die Lichterzeugungselement-Lichtabgabefläche 65 innerhalb des von dem Reflektor 52 umschriebenen Bereichs angeordnet sind.

Die Beleuchtungsvorrichtung kann weiterhin Mittel zu einer Abschattung und/oder Reduzierung des natürlichen Lichts aufweisen, insbesondere manuell einstellbare Mittel, so dass die Möglichkeit besteht, die Abgabe des natürlichen Lichts zu unterdrücken bzw. abzuschwächen oder ein bestimmtes Verhältnis zwischen der Abgabe des natürlichen Lichts und der Abgabe des künstlichen Lichts einzustellen. Es kann auch vorgesehen sein, dass diese Mittel im Fall einer Überschreitung eines Intensitätsschwellenwerts der mit dem Sensorelement 12 erfassten Intensität des natürlichen Lichts automatisch eine Reduktion der Abgabe des natürlichen Lichts, insbesondere unter den Intensitätsschwellenwert bewirken.

Die erfindungsgemäße Beleuchtungsvorrichtung eignet sich beispielsweise zur Beleuchtung eines Büros, eines Geschäftsraums eines Ausstellungsraums oder eines Museumsraums.

## Patentansprüche

1. Beleuchtungsvorrichtung zum Beleuchten eines in einem Gebäude befindlichen Raumes, aufweisend
- ein Lichtleitelement (4) zum Leiten eines natürlichen Lichts von einer Stelle außerhalb des Gebäudes in den Raum,
- ein Lichterzeugungselement (6) zur Erzeugung eines künstlichen Lichts,
- einen Lichtabgabe-Oberflächenbereich (8), wobei die Beleuchtungsvorrichtung derart gestaltet ist, dass sowohl das natürliche Licht, als auch das künstliche Licht zumindest teilweise über den Lichtabgabe-Oberflächenbereich (8) abgegeben werden kann,
wobei der Lichtabgabe-Oberflächenbereich (8) ein Oberflächenbereich einer Lichtleitplatte (14) ist, wobei die Gestaltung derart ist, dass das natürliche Licht an mehreren ersten Stellen (S1) in die Lichtleitplatte (14) eingekoppelt wird
und dass das künstliche Licht an mehreren zweiten Stellen (S2) in die Lichtleitplatte (14) eingekoppelt wird,
**dadurch gekennzeichnet dass**
Lichteinkopplungsbereiche zur Einkopplung des natürlichen Lichts an den ersten Stellen (S1) andersartig gestaltet sind als weitere Lichteinkopplungsbereiche zur Einkopplung des künstlichen Lichts an den zweiten Stellen (S2).

2. Beleuchtungsvorrichtung nach Anspruch 1,
weiterhin aufweisend
- ein Steuerelement (10) zur Steuerung des Lichterzeugungselements (6), wobei die Beleuchtungsvorrichtung derart ausgestaltet ist, dass durch das Steuerelement (10) eine Intensität und/oder eine spektrale Eigenschaft, beispielsweise die Farbtemperatur des künstlichen Lichts verändert werden kann.

3. Beleuchtungsvorrichtung nach Anspruch 2,
weiterhin aufweisend
- ein Sensorelement (12) zum Erfassen einer Eigenschaft des natürlichen Lichts,
wobei die Beleuchtungsvorrichtung derart ausgestaltet ist, dass das Steuerelement (10) in Abhängigkeit der, von dem Sensorelement (12) erfassten Eigenschaft des natürlichen Lichts das Lichterzeugungselement (6) ansteuern kann.

4. Beleuchtungsvorrichtung nach Anspruch 3,
bei der die Eigenschaft des natürlichen Lichts eine Farbtemperatur und/oder eine Intensität und/oder eine spektrale Eigenschaft ist.

5. Beleuchtungsvorrichtung nach einem der vorhergehenden Ansprüche,
bei der das Lichterzeugungselement (6) wenigstens eine erste LED zur Erzeugung eines ersten Lichts und wenigstens eine zweite LED zur Erzeugung eines zweiten Lichts aufweist, wobei sich das erste Licht von dem zweiten Licht in seinem Spektrum unterscheidet.

6. Beleuchtungsvorrichtung nach einem der vorhergehenden Ansprüche,
bei der das Lichtleitelement (4) zum Leiten eines natürlichen Lichts wenigstens eine Lichtleitfaser, vorzugsweise aus Kunststoff, umfasst.

7. Beleuchtungsvorrichtung mit den in den Ansprüchen 3 und 6 genannten Merkmalen,
bei der das Lichtleitelement (4) zum Leiten eines natürlichen Lichts außerdem wenigstens eine weitere Lichtleitfaser (42) aufweist, die dazu ausgebildet ist, einen Teil des natürlichen Lichts zur Erfassung der Eigenschaft zu dem Sensorelement (12) zu leiten.

8. Beleuchtungsvorrichtung nach einem der vorhergehenden Ansprüche, wobei die Lichtleitplatte (14) ringförmig oder rechteckförmig gestaltet ist.

9. Beleuchtungsvorrichtung nach einem der vorhergehenden Ansprüche,
bei der wenigstens eine der ersten Stellen (*S1*) zwischen zwei der zweiten Stellen *(S2)* und wenigstens eine der zweiten Stelle (*S2*) zwischen zwei der ersten Stellen (*S1*) angeordnet ist.

10. Beleuchtungsvorrichtung nach einem der vorhergehenden Ansprüche,
bei der sich die zweiten Stellen (*S2*) an einem äußeren Rand der Lichtleitplatte (14) befinden.

11. Beleuchtungsvorrichtung nach einem der vorhergehenden Ansprüche, weiterhin aufweisend
- wenigstes ein Licht-Einkoppelelement (20) zum Einkoppeln des von dem Lichtleitelement (4) in den Raum geleiteten natürlichen Lichts in die Lichtleitplatte (14), wobei das Licht-Einkoppelelement (20) vorzugsweise zur Aufweitung eines, durch das natürliche Licht gebildeten Lichtkegels ausgebildet ist.

## Claims

1. Lighting device for illuminating a space located in a building and comprising
- a light guide (4) for conducting natural light from a location outside the building into the room,
- a light-generating element (6) for generating an artificial light,
- a light output surface area (8), wherein the lighting device is so designed that both the natural light and the artificial light may be emitted at least partially via the light output surface area (8),
wherein the light output surface area (8) is a surface area of a light guide plate (14),
wherein the design is such that the natural light is coupled to a plurality of first locations (S1) in the light guide plate (14), and
wherein the artificial light is coupled to the light guide plate (14) at a plurality of
second locations (S2),
**characterized in that**
the light-coupling regions for coupling natural light in the first locations (S1) are designed differently from further light-coupling regions for coupling artificial light to the second locations (S2).

2. Lighting device according to claim 1, further comprising
- a control element (10) to control the light-generating element (6), wherein the lighting device is so configured that an intensity and/or spectral property, such as the color temperature of the artificial light, may be changed by the control element (10).

3. Lighting device according to claim 2, further comprising
- a sensor element (12) to detect a property of the natural light, wherein the lighting device is so configured that the control element (10) may control a property detected by the sensor element (12) as a function of the natural light of the light-generating element (6).

4. Lighting device according to claim 3,
wherein the property of the natural light is a color temperature and/or an intensity and/or a spectral property.

5. Lighting device according to one of the preceding claims,
wherein the light generating element (6) has at least a first LED to generate a first light and at least a second LED to generate a second light, wherein the first light differs from the second light in its spectrum.

6. Lighting device according to one of the preceding claims,
wherein the light-guiding element (4) for conducting a natural light comprises at least an optical fiber, preferably of plastic.

7. Lighting device having the features mentioned in claims 3 and 6,
wherein the light-guiding element (4) for conducting a natural light also comprises at least a further optical fiber (42) which is designed to direct a portion of the natural light to detect the property at the sensor element (12).

8. Lighting device according to one of the preceding claims,
wherein the light guide plate (14) is configured to be ring-shaped or rectangular.

9. Lighting device according to one of the preceding claims,
wherein at least one of the first locations (S1) is arranged between two of the second locations (S2) and at least one of the second locations (S2) is arranged between the first two locations (S1).

10. Lighting device according to one of the preceding claims,
wherein the second locations (S2) are located on an outer edge of the light guide plate (14).

11. Lighting device according to one of the preceding claims, further comprising
- at least a light-coupling element (20) for coupling of the natural light directed into the space from the light-guiding element (4), to the light guide plate (14), wherein the light-coupling element (20) is preferably designed to widen the cone of light formed by the natural light.

## Revendications

1. Dispositif d'éclairage pour l'éclairage d'une pièce se trouvant dans un bâtiment, comprenant :
- un élément de guidage de lumière (4) pour le guidage d'une lumière naturelle d'un endroit à l'extérieur du bâtiment vers la pièce,
- un élément de production de lumière (6) pour la production d'une lumière artificielle,
- une zone de surface de distribution de lumière (8), le dispositif d'éclairage étant conçu de façon à ce que, aussi bien la lumière naturelle que la lumière artificielle puisse être distribuées au moins partiellement par l'intermédiaire de la zone de surface de distribution de lumière (8),
la zone de surface de distribution de lumière (8) étant une zone de surface d'une plaque de guidage de lumière (14), conçue de façon à ce que la lumière naturelle soit injectée à plusieurs premiers endroits (S1) dans la plaque de guidage de lumière (14) et
la lumière artificielle est injectée à plusieurs deuxièmes endroits (S2) dans la plaque de guidage de lumière (14),
**caractérisé en ce que**
les zones d'injection de lumière pour l'injection de la lumière naturelle sont conçues au niveau des premiers endroits (S1) différemment des zones d'injection de lumière pour l'injection de la lumière artificielle au niveau des deuxièmes endroits (S2).

2. Dispositif d'éclairage selon la revendication 1,
comprenant en outre :
- un élément de commande (10) pour la commande de l'élément de production de lumière (6), le dispositif d'éclairage étant conçu de façon à ce que l'élément de commande (10) permet de modifier une intensité et/ou une propriété spectrale, par exemple la température chromatique de la lumière artificielle.

3. Dispositif d'éclairage selon la revendication 2,
comprenant en outre :
- un élément de capteur (12) pour la mesure d'une propriété de la lumière naturelle, le dispositif d'éclairage étant conçu de façon à ce que l'élément de commande (10) puisse contrôler l'élément de production de lumière (6) en fonction de la propriété de la lumière naturelle mesurée par l'élément de capteur (12).

4. Dispositif d'éclairage selon la revendication 3,
dans lequel la propriété de la lumière naturelle est une température chromatique et/ou une intensité et/ou une propriété spectrale.

5. Dispositif d'éclairage selon l'une des revendications précédentes,
dans lequel l'élément de production de lumière (6) comprend au moins une première LED pour la production d'une première lumière et au moins une deuxième LED pour la production d'une deuxième lumière, la première lumière présentant un spectre différent de la deuxième lumière.

6. Dispositif d'éclairage selon l'une des revendications précédentes,
dans lequel l'élément de guidage de lumière (4) pour le guidage d'une lumière naturelle comprend une fibre optique, de préférence constituée d'une matière plastique.

7. Dispositif d'éclairage avec les caractéristiques mentionnées dans les revendications 3 et 6,
dans lequel l'élément de guidage de lumière (4) comprend, pour le guidage d'une lumière naturelle, en outre au moins une fibre optique (42) supplémentaire, qui est conçue pour guider une partie de la lumière naturelle vers l'élément de capteur (12) pour la mesure de la propriété.

8. Dispositif d'éclairage selon l'une des revendications précédentes,
la plaque de guidage de lumière (14) présentant une forme annulaire ou rectangulaire.

9. Dispositif d'éclairage selon l'une des revendications précédentes,
dans lequel un des premiers endroits (S1) est disposé entre deux des deuxièmes endroits (S2) et au moins un des deuxièmes endroits (S2) est disposé entre deux des premiers endroits (S1).

10. Dispositif d'éclairage selon l'une des revendications précédentes,
dans lequel les deuxièmes endroits (S2) se trouvent au niveau d'un bord externe de la plaque de guidage de lumière (14).

11. Dispositif d'éclairage selon l'une des revendications précédentes, comprenant en outre :
- au moins un élément d'injection de lumière (20) pour l'injection de la lumière naturelle guidée vers la pièce par l'élément de guidage de lumière (4) dans la plaque de guidage de lumière (14), l'élément d'injection de lumière (20) étant conçu de préférence pour l'élargissement d'un cône de lumière formé par la lumière naturelle.
